# EUROPEAN PATENT SPECIFICATION

(11) **EP 2 521 390 B1**
(45) Date of publication and mention of the grant of the patent: **15.03.2017**
(21) Application number: 10840369.2
(22) Date of filing: 12.06.2010
(51) Int. Cl.: H04W 16/10

(54) **METHOD FOR CARRIER AGGREGATION AND METHOD FOR DYNAMIC SPECTRUM ALLOCATION**
VERFAHREN ZUR TRÄGERAUFNAHME UND VERFAHREN ZUR DYNAMISCHEN SPEKTRUMSZUWEISUNG
PROCÉDÉ D'AGRÉGATION DE PORTEUSES ET PROCÉDÉ D'ALLOCATION DE SPECTRE DYNAMIQUE

(30) Priority: 31.12.2009 CN 200910260737
(43) Date of publication of application: 07.11.2012
(73) Proprietor: ZTE Corporation, Shenzhen, Guangdong 518057 (CN)
(72) Inventor: DIAO, Xinxi, Guangdong 518057 (CN); ZHU, Xiaodong, Guangdong 518057 (CN); LAI, Zhengrong, Guangdong 518057 (CN); MA, Zhifeng, Guangdong 518057 (CN); YANG, Guang, Guangdong 518057 (CN)
(74) Representative: Modiano, Micaela Nadia
(86) International application number: PCT/CN2010/073889
(87) International publication number: WO 2011/079579

(56) References cited:
- WO-A1-2009/104435
- CN-A- 1 965 513
- CN-A- 101 729 125
- CN-A- 101 730 112
- CN-A- 101 778 392
- US-A1- 2007 286 156
- US-A1- 2007 286 156
- US-A1- 2008 151 788
- US-A1- 2009 059 820
- US-A1- 2009 059 820

## Description

### Field of the Invention

The present invention relates to the field of radio communication, and in particular to a method for carrier aggregation and a method for dynamic spectrum allocation.

### Background of the Invention

Currently, carrier aggregation of the LTE-A (Long Term Evolution Advance) in the 3GPP (Third Generation Partnership Project) not only can achieve a larger transmission bandwidth, but also can achieve a flexible duplex mode. For example, the combined use of the two-way use of the spectrum and the one-way use of the spectrum can be achieved by the carrier aggregation, thereby improving the utilization rate of the spectrum and the flexibility in the use of the spectrum and thereby improving the effectiveness of the radio communications system in use of the spectrum under the complex networking environment.

In order to reduce the network construction cost under the environment of of the coexistence of the 2G network system, the 3G network system and the LTE system, the operators construct the network by the RAN Sharing (Radio Access Network Sharing) mode. The RAN Sharing mode is achieved mainly by making the TDD (Time Division Duplexing) system and the FDD (Frequency Division Duplexing) system deploy with co-site or co-antenna.

In the traditional TDD mode, the radio access point adopts the same band to transmit a downlink signal and receive an uplink signal. In order to avoid the interference of receiving and sending signals between the TDD system and the FDD system, it needs to have a band with enough width as a guard band between the TDD system and the FDD system, such as setting the width of the guard band as more than 10 MHz.

Currently, there mainly are two modes for transmitting the signals by using the guard band between the TDD system and the FDD system: mode 1, different station deployment of the micro-cell radio access point, because the indoor radio access point or the micro radio access point and the macro-cell radio access point are deployed in different stations, there is spatial isolation between the micro-cell radio access point and the macro-cell access point; therefore, it only needs to set a smaller guard band between the TDD system and the FDD system (such as setting the guard band as 3 MHz); and mode 2, when the TDD system and the FDD system are deployed with co-site or co-antenna, the micro-cell radio access point or the macro-cell access point uses a guard band between the TDD system and the FDD system to achieve the communication with a user terminal.

Considering the mode that the radio access point uses the guard band between the TDD system and the FDD system to achieve the communication with the user terminal when the TDD system and the FDD system are deployed with co-site or co-antenna, the technical solution provided by the patent application, application No. US20070286156, entitled *utilizing guard band between FDD and TDD radio systems*, is shown in Fig. 1.

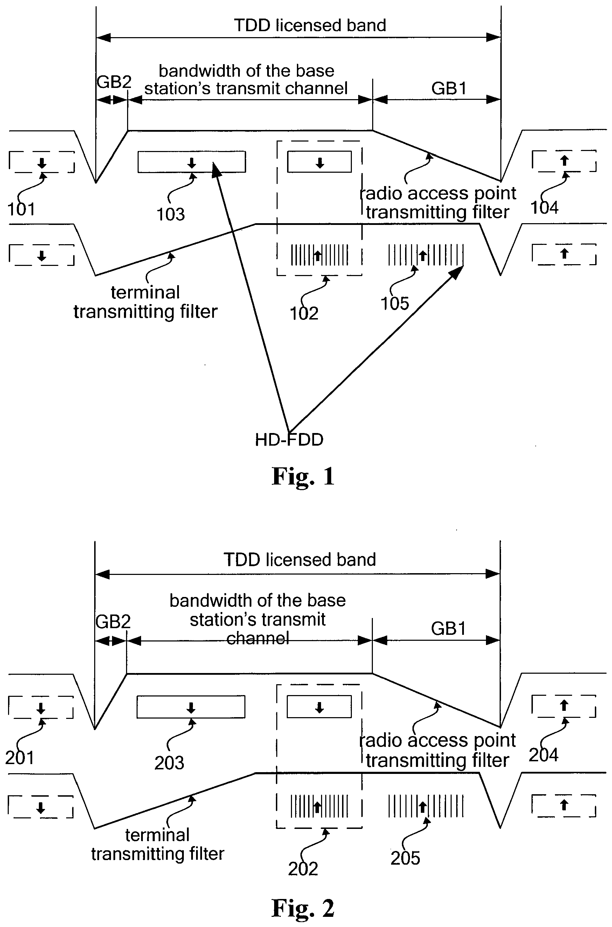

Referring to Fig. 1, it is a schematic diagram of using the guard band spectrum between the TDD system and the FDD system in the technical solution provided by the above patent application (patent No. US20070286156). In Fig. 1, an FDD system which operates within a first band **101** at least provides a first FDD channel; a TDD system which operates within a second band **102** at least provides a first TDD channel; the first band **101** and the second band **102** are separated by a third band **103;** and an H-FDD (half-duplex FDD) system which operates within the third band **103** at least provide a first H-FDD channel, with a transmission of the first H-FDD channel being synchronized with an uplink transmission or a downlink transmission of the TDD. The FDD system further at least configures a second FDD channel on a fourth band **104,** and the fourth band **104** and the second band **102** are separated by a fifth band **105;** and the H-FDD further configures a second H-FDD channel on the fifth band **105.** The third band **103** and the fifth band **105** compose a half-duplex FDD (H-FDD).

By adopting the above technical solution, although the utilization rate of the guard band can be partially improved by way of introducing the half-duplex FDD (i.e. HD-FDD) on the guard band, the following defects exist upon introducing the HD-FDD on the guard band: on one hand, when a radio access point sends a downlink signal to a user terminal by using the third band **103,** the fifth band **105** is in the idle state, when the radio access point receives an uplink signal sent by the user terminal by using the fifth band **105,** the third band **103** is in the idle state, and therefore, the problem that the utilization rate of the guard band is lower exists upon adopting the existing technical solution. On the other hand, it needs two guard bands to guarantee that the band of double-wire-use achieves the normal bidirectional communications, but it cannot guarantee that there is a sufficient bandwidth to ensure the bidirectional communications in the actual network environment, and therefore the problems that the implementation of the bidirectional communications by using the guard band is unstable and the system performance is poor due to the poor flexibility in use of the guard band exist in the related art.
Patent document US 2009/059820 A1 discloses a method and system for using frequency resources in a communications systems with TDD and FDD frequency subbands.
Patent document US 2007/286156 A1 discloses wireless systems and methods involving an FDD and a TDD system whose frequency bands are separated by a third frequency band used by a half-duplex FDD system.
Patent document US 2008/151788 A1 discloses a method freeing a portion of spectrum used by FDD radios to enable deployment of TDD radios, replacing FDD radios with H-FDD radios on a guard band between those used by the FDD and TDD radios.
Patent document WO 2009/104435 A1 discloses a base station used for FDD communications which signals which parts of a frequency band are used depending on the base station belonging to a border or a non-border area.

### Summary of the Invention

The embodiments of the present invention provide a method for carrier aggregation and a method for dynamically allocating a spectrum, so as to improve the spectrum utilization rate of the guard band and the flexibility in the use of the guard band spectrum.

A method for carrier aggregation comprises:
in a first time zone, sending, by a radio access point, a downlink signal to a user terminal by using a first guard band between a TDD system and an FDD system and a bidirectional communication band of the TDD system;
   or/and,
in a second time zone, receiving, by the radio access point, a uplink signal sent by the user terminal using a second guard band between the TDD system and the FDD system and the bidirectional communication band.

In the embodiments of the present invention, on one hand, in the TDD system, because the radio access point simultaneously sends the downlink signal to the user terminal by using the bidirectional communication band in the TDD system and the guard band between the TDD system and the FDD system when sending the downlink signal to the user terminal, thereby the spectrum utilization rate of the guard band is improved and the transmission rate of the downlink signal is improved; on the other hand, the user terminal can also simultaneously sends the uplink signal to the radio access point by using the bidirectional communication band in the TDD system and the guard band between the TDD system and the FDD system, thereby further improving the spectrum utilization rate of the guard band and improving the transmission rate of the downlink signal. Therefore, the flexibility of the communications between the radio access point and the user terminal is improved and the flexibility in use of the guard band between the TDD system and the FDD system is also improved by using the technical solution of the present invention.

A method for implementing a dynamic spectrum allocation,
for application in the dynamic spectrum allocation of sharing a unilateral guard band between a micro-cell radio access point and a macro-cell radio access point in a TDD system, comprising:
in a first time zone, sending, by the macro-cell access point, a first downlink signal to a user terminal by using a first unilateral guard band between the TDD system and an FDD system and a bidirectional communication band of the TDD system;
in a second time zone, sending, by the micro-cell access point, a second downlink signal to the user terminal by using the first unilateral guard band between the TDD system and the FDD system and the bidirectional communication band of the TDD system;
   or,
in a third time zone, receiving, by the macro-cell radio access point, a first uplink signal sent by the user terminal using a second unilateral guard band between the TDD system and the FDD system and the bidirectional communication band;
in a fourth time zone, receiving, by the micro-cell radio access point, a second uplink signal sent by the user terminal using the second unilateral guard band between the TDD system and the FDD system and the bidirectional communication band;
the first time zone and the second time zone being respectively a time zone composed of different downlink time slots in the same radio frame;
the third time zone and the fourth time zone being respectively a time zone composed of different uplink time slots in the radio frame; and
adjusting the number of downlink time slots composing the respective time zone and adjusting the number of uplink time slots composing the respective time zone according to the respective downlink traffic of the macro-cell access point and the micro-cell access point.

In the embodiments of the present invention, in the TDD system, when the macro-cell radio access point and the micro-cell radio access point share the guard band between the TDD system and the FDD system, the downlink time slots shared by the macro-cell radio access point and the micro-cell are allocated in the same radio frame structure. And the number of the downlink time slots occupied respectively can be adjusted according to the change of the situation of the downlink service of macro-cell radio access point and the micro-cell radio access point. Thereby it can utilize the spectrum resources more effectively, increase the spectrum utilization rate and improve the network performance.

### Brief Description of the Drawings

Fig. 1 is a schematic diagram of using the guard band spectrum between the TDD system and the FDD system in the related art;
Fig. 2 is a diagram of spectrum distribution using the TDD system and the FDD system according to the embodiment of the present invention;
Fig. 3A and 3B are a structural schematic diagram of implementing the downlink carrier aggregation and the uplink carrier aggregation according to the embodiment of the present invention respectively;
Fig. 4 is a first schematic diagram of implementing the asymmetric carrier aggregation on the micro-cell radio access point according to the embodiment of the present invention;
Fig. 5 is a second schematic diagram of implementing the asymmetric carrier aggregation on the micro-cell radio access point according to the embodiment of the present invention;
Fig. 6 is a third schematic diagram of implementing the asymmetric carrier aggregation on the micro-cell radio access point according to the embodiment of the present invention;
Fig. 7 is a schematic diagram of implementing the interference suppression by using the carrier aggregation mode of the present invention according to the embodiment of the present invention;
Fig. 8 is a schematic diagram of using the guard band spectrum by the macro-cell access point according to the embodiment of the present invention;
Fig. 9 is a schematic diagram of using the guard band spectrum by the micro-cell access point according to the embodiment of the present invention; and
Fig. 10 is a schematic diagram of implementing the dynamic spectrum allocation between the macro-cell access point and the micro-cell access point according to the embodiment of the present invention.

### Detailed Description of Embodiments

The embodiments of the present invention will be described in detail in conjunction with the drawings of the description hereinafter.

Referring to Fig. 2, which is a spectrum distribution diagram of the spectrum of a TDD system and the spectrum of an FDD system in the embodiment of the present invention, the TDD system and the FDD system are deployed with co-site or co-antenna. And the distribution diagram comprises: a first band **201,** a second band **202,** a third band **203,** a fourth band **204** and a fifth band **205,** wherein the first band **201** is a downlink band of the paired spectrums in the FDD system; the second band **202** is a band used for bidirectional communication in the TDD system, and the second band **202** is a band used in the traditional TDD mode on the TDD licensed band; the third band **203** is a guard band between the first band **201** and the second band **202;** the fourth band **204** is a uplink band of the paired spectrums in the FDD system; and the fifth band **205** is a guard band between the fourth band **204** and the second band **202.**

The embodiment of the present invention is not limited to the spectrum distribution diagram as shown in Fig. 2, and can also be a spectrum distribution diagram in which the positions of the first band **201** and the second band **202** are exchanged and the positions of the third band **203** and the fifth band **205** are exchanged.

In the embodiment of the present invention, a macro-cell radio access point operating on the third band **203** and the second band **202** and a macro-cell radio access point operating on the first band **201** or/and a macro-cell radio access point operating on the fourth band **204** are deployed with co-site or co-antenna. Under the circumstance that the station is shared or the antenna is shared between a plurality of macro-cell radio nodes, the size of a unilateral guard band (such as the third band **203** and the fifth band **205** in the embodiment of the present invention) between the TDD system and the FDD system needs to be set as more than 10 MHz.

The third band **203** is a sub-band which is located on the TDD frequency band (such as 1880-1920 MHz) in the embodiment of the present invention.

Preferably, in the embodiment of the present invention, the second band **202** and the third band **203** are adjacent or non-adjacent bands on the TDD licensed band. When they are the non-adjacent bands, between the second band **202** and the third band **203,** there is (are) band(s) used for one-way communication or bidirectional communication which does not participate in the carrier aggregation.

Preferably, in the embodiment of the present invention, the second band **202** and the fifth band **205** are adjacent or non-adjacent bands on the TDD licensed band. When they are the non-adjacent bands, between the second band **202** and the fifth band **205,** there is (are) band(s) used for one-way communication or bidirectional communication which does not participate in the carrier aggregation is comprised.

Preferably, the third band **203** is located between the first band **201** of the FDD system and the second band **202.**

Preferably, the fifth band **205** is located between the fourth band **204** of the FDD system and the second band **202.**

Preferably, in order to suppress the existence of mutual interference of receiving and sending signals between the third band **203** and the first band **201,** in the embodiment of the present invention, an isolation band GB2 is set between the first band **201** and the third band **203** (i.e. the isolation band GB2 is retained at the side adjacent to the first band **201** of the FDD system on the third band **203**). Similarly, in the embodiment of the present invention in order to suppress the existence of mutual interference of receiving and sending signals between the fifth band **205** and the fourth band **204,** an isolation band GB1 is set between the fifth band **205** and the fourth band **204** (i.e. the isolation band GB1 is retained at the side adjacent to the fourth band **204** of the FDD system on the fifth band **205**).

In the embodiment of the present invention, for various types of the radio access point (including the macro-cell radio access point and the micro-cell radio access point), the modes by which they use the guard band between the TDD system and the FDD system are inconsistent. Therefore, the technical solution of the present invention will be described in detail by using two embodiments hereinafter.

### Embodiment 1

Embodiment 1 will be described in detail aiming at the macro-cell radio access point communicating with the user terminal by using the guard band between the TDD system and the FDD system.

In the embodiment of the present invention, the spectrum distribution of the FDD system spectrum and the TDD system spectrum as shown in Fig. 2 is adopted. The macro-cell radio access point sends a synchronization signal and a cell broadcast signal on the second band **202** according to the method specified by the TDD technical standard and provides the spectrum resources for the user terminal accessed randomly according to the mode specified by the TDD technical standard.

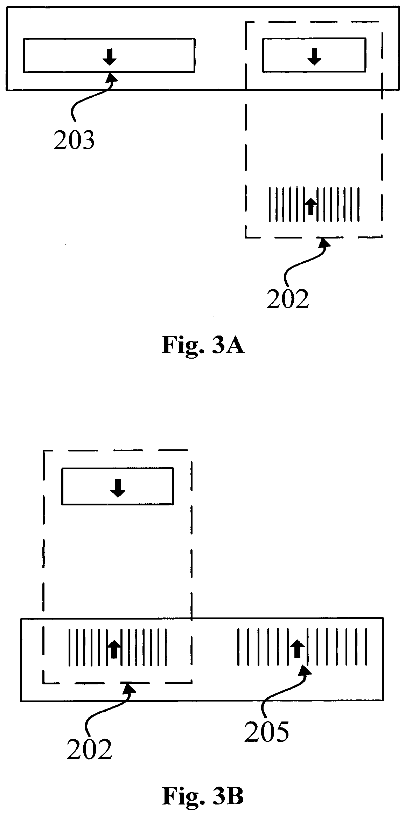

In the TDD system, when the macro-cell radio access point in the TDD system needs to send a downlink signal to the user terminal, in a first time zone (the first time zone is a time zone composed of downlink time slots allocated for the macro-cell radio access point in a radio frame), the macro-cell radio access point sends the downlink signal to the user terminal by using a downlink carrier on the third band **203** and a downlink carrier on the second band **202** parallelly, as shown in Fig. 3A. After having received the downlink signal send by the macro-cell radio access point, the user sends receipt acknowledgement information (such as ACK (Acknowledgement Character) or NACK etc.) to the macro-cell radio access point by using a uplink carrier on the second band **202** in a second time zone (the second time zone is a time zone composed of uplink time slots allocated for the macro-cell radio access point in the radio frame), as shown in Fig. 3B.

When the macro-cell radio access point needs to send a uplink scheduling instruction to the user terminal to instruct the user terminal send a uplink signal to the macro-cell radio access point by using the uplink carrier on the second band **202** and a uplink carrier on the fifth band **205** parallelly, in a third time zone, the macro-cell radio access point sends the uplink scheduling instruction to the user terminal by using the downlink carrier on the second band **202.** After having received the uplink scheduling instruction sent by the macro-cell radio access point, the user terminal sends the uplink signal to the macro-cell radio access point by using the uplink carrier on the second band **202** and the uplink carrier on the fifth band **205** parallelly in a fourth time zone.

### Embodiment 2

Embodiment 2 will be described in detail aiming at the micro-cell radio access point communicating with the user terminal by using the guard band between the TDD system and the FDD system.

In the embodiment of the present invention, the spectrum distribution of the FDD system spectrum and the TDD system spectrum as shown in Fig. 2 is adopted.

The micro-cell radio access point using the guard band between the TDD system and the FDD system mainly comprises three modes as follows.

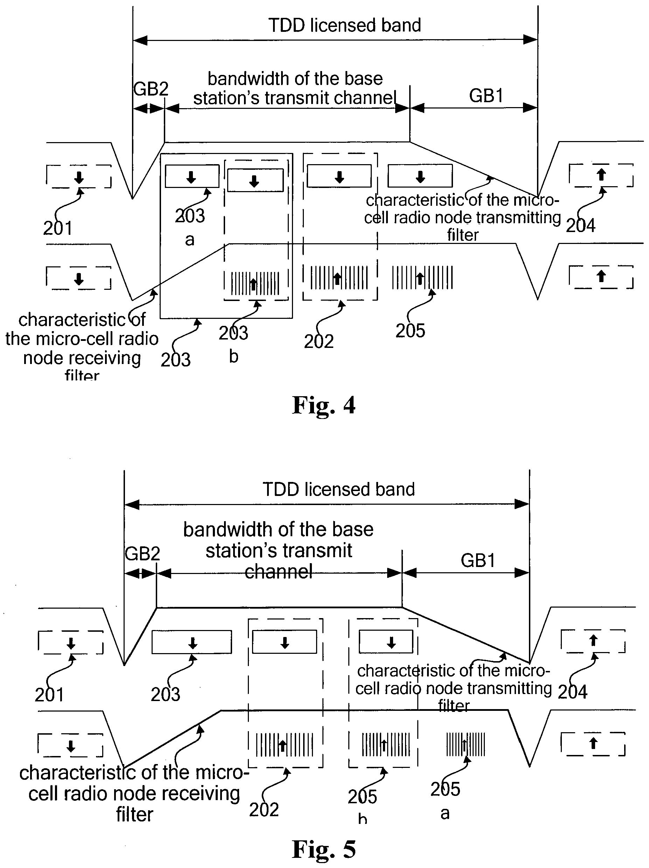

Mode 1: because the micro-cell radio access point and the macro-cell radio access point in the TDD system/FDD system are deployed in different stations, therefore, due to the effect of the spatial isolation the interference intensity of the transmit power of the macro-cell radio access point disposed on the first band **201** which has been received by the micro-cell radio access point disposed on the third band **203** is lower. Thus, the micro-cell radio access point can receive the uplink signal sent by the user terminal by using a part of the band in the third band **203.** As shown in Fig. 4, the third band **203** can be divided into a first sub-band (which is represented by **203a** hereinafter) and a second sub-band (which is represented by **203b** hereinafter), wherein the first sub-band **203a** is used for one-way downlink communication; and the second sub-band **203b** is used for bidirectional communication. The size of the band of the first sub-band **203a** is determined by the interference produced by the uplink signal transmitted by the TDD user terminal on the second sub-band **203b** on the downlink signal received by the FDD user terminal on the first band **201.** For example, the size of the first sub-band **203a** is set to ensure that when the TDD user terminal of the first sub-band **203a** transmits the uplink signal to the micro-cell radio access point, the signal power which is leaked by it to the FDD user terminal of the first band **201** is lower than a preset power threshold.

The implementation of the communications between the micro-cell radio access point and the user terminal by using the above mode 1 is as follows: when the micro-cell radio access point needs to send a downlink signal to the user terminal, the micro-cell radio access point sends the downlink signal (the downlink signal comprises one or more of the following signals: a cell broadcast signal of the macro-cell, a multimedia broadcast signal of the macro-cell, a cell synchronization signal and service data of the macro-cell) to the user terminal by using a downlink carrier of the second band **202** and a downlink carrier of the first sub-band **203a** or/and a downlink carrier of the second sub-band **203b** in a first time zone. After the user terminal has received the downlink signal sent by the micro-cell radio access point, the user terminal sends the ACK or the NACK to the micro-cell radio access point by using a uplink carrier of the second band **202** or/and a uplink carrier of the second sub-band **203b** in a second time zone.

Mode 2: because the micro-cell radio access point and the macro-cell radio access point in the TDD system/FDD system are deployed in different stations, therefore, due to the effect of the spatial isolation the interference intensity of the micro-cell radio access point disposed on the fifth band **205** on the macro-cell radio access point disposed on the fourth band **204** is lower. Thus, the micro-cell radio access point can send the downlink signal to the user terminal by using a part of the band in the fifth band **205.** As shown in Fig. 5, the fifth band **205** can be divided into a third sub-band (which is represented by **205a** hereinafter) and a fourth sub-band (which is represented by **205b** hereinafter), wherein the third sub-band **205a** is used for one-way uplink communication; and the fourth sub-band **205b** is used for bidirectional communication. The size of the band of the third sub-band **205a** is determined by the interference produced by the uplink signal transmitted by the FDD user terminal on the fourth band **204** on the downlink signal received by the TDD user terminal on the fourth sub-band **205b.** For example, the size of the third sub-band **205a** is set to ensure that when the FDD user terminal of the fourth band **204** transmits the uplink signal to the macro-cell radio access point, the signal power which is leaked by it to the TDD user terminal of the fourth sub-band **205b** is lower than a preset power threshold.

The implementation of the communications between the micro-cell radio access point and the user terminal by using the above mode 2 is as follows: when the micro-cell radio access point needs to send a uplink scheduling instruction to the user terminal, the micro-cell radio access point can send the uplink scheduling instruction to the user terminal by using a downlink carrier of the second band **202** or/and a downlink carrier of the fourth sub-band **205b** in a third time zone (the third time zone is a time zone composed of downlink time slots which are allocated by a radio frame for the micro-cell radio access point). After having received the uplink scheduling instruction sent by the micro-cell radio access point, the user terminal parallelly sends a uplink signal to the micro-cell radio access point by using a uplink carrier of the second band **202** and a uplink carrier of the fourth sub-band **205b** or/and a uplink carrier of the third sub-band **205a** in a fourth time zone (the fourth time zone is a time zone composed of uplink time slots which are allocated by the radio frame for the micro-cell radio access point).

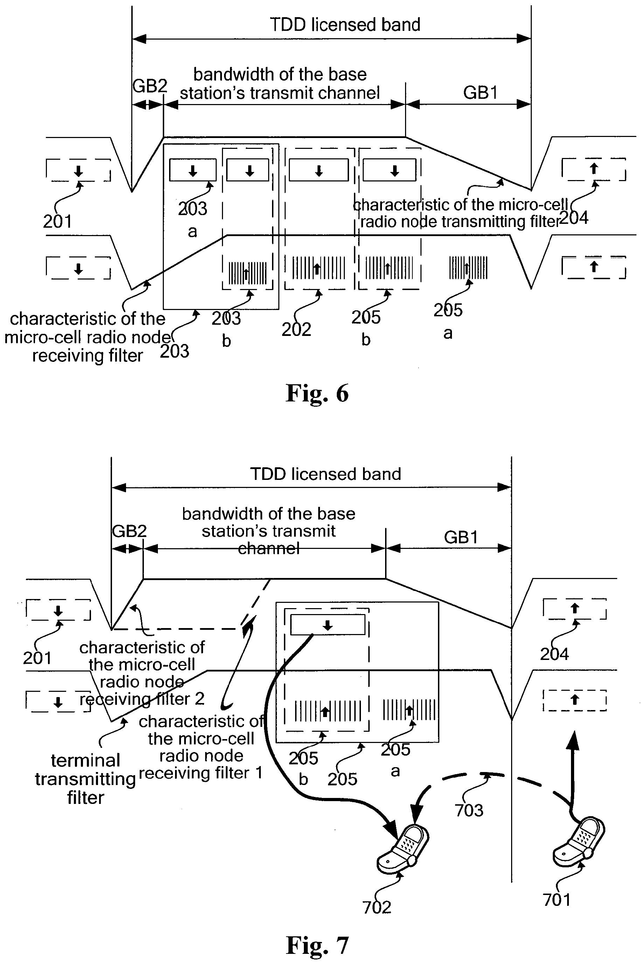

Mode 3: in order to further sufficiently use the third band **203** and the fifth band **205** to implement bidirectional communication, the micro-cell radio node can communicate with the user terminal by using the fifth band **205,** the third band **203** and the second band **202.** As shown in Fig. 6, the above mode 1 is adopted on the third band **203** and the second band **202** to implement the communications with the user terminal, and the above mode 2 is adopted on the fifth band **205** and the second band **202** to implement the communications with the user terminal.

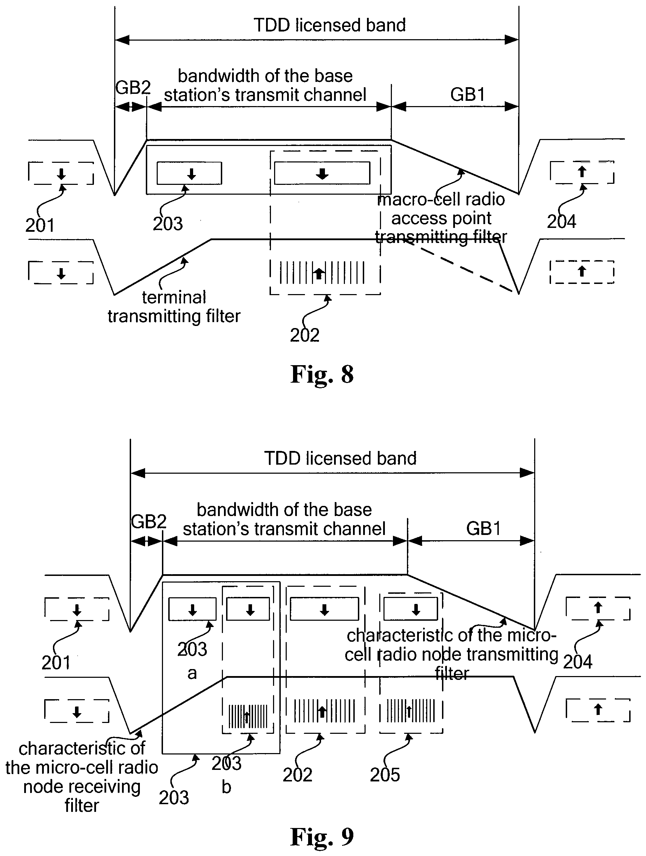

Preferably, in order to control the interference produced by the signal transmitted by the FDD user terminal on the fourth band **204** on the signal received by the TDD user terminal on the fifth band **205** within an acceptable range, in the embodiment of the present invention, a reception channel of the micro-cell radio access point is set on the fourth sub-band **205b** (i.e. the third sub-band **205a** is set between the fourth sub-band **205b** and the fourth band **204,** and the third sub-band **205a** is adopted to serve as a guard band between the fourth sub-band **205b** and the fourth band **204**). As shown in Fig. 7, if the total bandwidth of the fifth band **205** is 10 MHz, the bandwidth of the fourth sub-band **205b** is set to be 5 MHz. Similarly, in order to control the interference produced by the signal transmitted by the TDD user terminal on the third band **203** on the signal received by the FDD user terminal on the first band **201** within an acceptable range, in the embodiment of the present invention, a reception channel of the micro-cell radio access point is set on the second sub-band **203b** (i.e. the first sub-band **203a** is set between the second sub-band **203b** and the first band **201,** and the first sub-band **203a** is adopted to serve as a guard band between the second sub-band **203b** and the first band **201**). As shown in Fig. 8, if the total bandwidth of the third band **203** is 10 MHz, the bandwidth of the second sub-band **203b** is set to be 5 MHz.

Preferably, in order to suppress the interference produced by the uplink signal transmitted by the TDD user terminal located on the second sub-band **203b** to the micro-cell radio access point in the TDD system on the signal received by the FDD user terminal located on the first band **201** in the FDD system, in the embodiment of the present invention, the reception channel of the micro-cell radio access point is set on the second sub-band **203b** (i.e. the first sub-band **203a** is located between the second sub-band **203b** and the first ban **201** of the FDD system, and the first sub-band **203a** is the guard band between the second sub-band **203b** and the first band **201** of the FDD system, as shown in Fig. 9).

It needs to be noted that the reason that receiving the signal on the fifth band can be implemented by using the technical solution of the present invention can be explained by an example, and the example is as follows: in the embodiment of the present invention, the interference between the fourth band **204** and the fifth band **205** mainly is the interference produced by the signal transmitted by the FDD terminal on the fourth band **204** to the FDD system radio access point on the signal sent from the radio access point and received by the TDD terminal on the fifth band **205.** As shown in Fig. 7, when an FDD terminal **701** operating on the fourth band **204** sends a uplink signal to the radio access point of the FDD system, an outward leaked signal **703** carried thereby may be received by a TDD terminal **702** which currently is in the receiving state. Because the fourth sub-band **205b** and the fourth band **204** are separated by the third sub-band **205a** (the size of the third sub-band **205a** is about 5 MHz generally), and due to the limitation of the ACLR (Adjacent Channel Leakage Ratio), the power of the leaked signal **703** from the FDD terminal to the TDD terminal is more than 40 dB lower than the transmit power of the FDD terminal. And because the transmit power of the micro-cell radio access point is greater than or equal to the transmit power of the FDD terminal, the path loss from the micro-cell radio access point to the TDD terminal **702** is equivalent to the path loss from the FDD terminal **701** to the TDD terminal **702.** Therefore, even if the path loss from the micro-cell radio access point to the TDD terminal **702** is 30 dB greater than the path loss from the FDD terminal **701** to the TDD terminal **702,** under the circumstance that the transmit power of the micro-cell radio access point is identical to that of the FDD terminal **701,** the power which is received by the TDD terminal from the micro-cell radio access point is 10 dB greater than the power which is leaked by the FDD terminal **701** to the TDD terminal **702.** Therefore, it can be guaranteed that the TDD terminal receives normally the signals on the fifth band by using the technical solution of the present invention.

The mode for aggregating the carriers provided by the embodiment of the present invention can be applied in the TDD system and can also be applied in a collaborative system composed of the FDD system and the TDD system.

In the embodiments of the present invention, for one aspect, in the TDD system, because the radio access point simultaneously sends the downlink signal to the user terminal by using the bidirectional communication band in the TDD system and the guard band between the TDD system and the FDD system when sending the downlink signal to the user terminal, thereby the spectrum utilization rate of the guard band is improved and the transmission rate of the downlink signal is improved. For another aspect, the user terminal can also simultaneously sends the uplink signal to the radio access point by using the bidirectional communication band in the TDD system and the guard band between the TDD system and the FDD system, thereby further improving the spectrum utilization rate of the guard band and improving the transmission rate of the downlink signal. For yet another aspect, aiming at the macro-cell radio access point and the micro-cell radio access point, the guard band and a different band is aggregated to implement the communications with the user terminal, therefore, the flexibility of the communications between the radio access point and the user terminal is improved. And the flexibility in use of the guard band between the TDD system and the FDD system is also improved by using the technical solution of the present invention.

Based on the above mode which the macro-cell radio access point and the micro-cell radio access point use a guard band between the TDD system and the FDD system, the embodiment of the present invention further provides a method for dynamically allocating spectrum resources between the macro-cell and the micro-cell, and the method is applied in the dynamic spectrum allocation of sharing a unilateral guard band between a micro-cell radio access point and a macro-cell radio access point in a TDD system.

In the embodiment of the present invention, how the macro-cell radio access point adopts a guard band between the TDD system and an FDD system to implement the communications with a user terminal can adopt the mode in embodiment 1; and how the micro-cell radio access point adopts the guard band between the TDD system and the FDD system to implement the communications with the user terminal can adopt the mode in embodiment 2, which will not be described here redundantly.

In the embodiment of the present invention, radio frames used by the macro-cell radio access point and the micro-cell radio access point keeps strict synchronization in time slots allocation, and the downlink time slots configuration of the time division duplexing radio frame by the macro-cell radio access point on the third band **203** and the second band **202** is strictly consistent with the downlink time slots configuration of the radio frame by the micro-cell radio node on the second sub-band **203b.**

In the present embodiment, the micro-cell radio node operating on the second sub-band **203b** is an indoor distributing base station and the macro-cell radio node is an outdoor distributing base station. Because the micro-cell radio access point and the macro-cell radio access point are deployed in different stations, a very large spatial isolation exists between the micro-cell radio access point and the macro-cell radio access point. If the spatial isolation between the micro-cell radio access point and the macro-cell radio access point is greater than 40dB, the backhaul path (BACKHAULL) of the micro-cell radio access point can adopt the mode of XDSL (Digital Subscriber Line) or XPON (Passive Optical Network) to implement.

In the embodiment of the present invention, the synchronization between the downlink time slots configuration of the time division duplexing radio frame adopted by the macro-cell radio access point and the time slots of the radio frame adopted by the micro-cell radio access point can be implemented by one of the following modes or the combination thereof:
mode 1: it is implemented by a synchronization signal which meets the IEEE 1588 standard and on the XDSL and the XPON; and
mode 2: it is implemented by receiving a synchronization signal sent by the macro-cell radio access point on the second band **202** or the third band **203.**

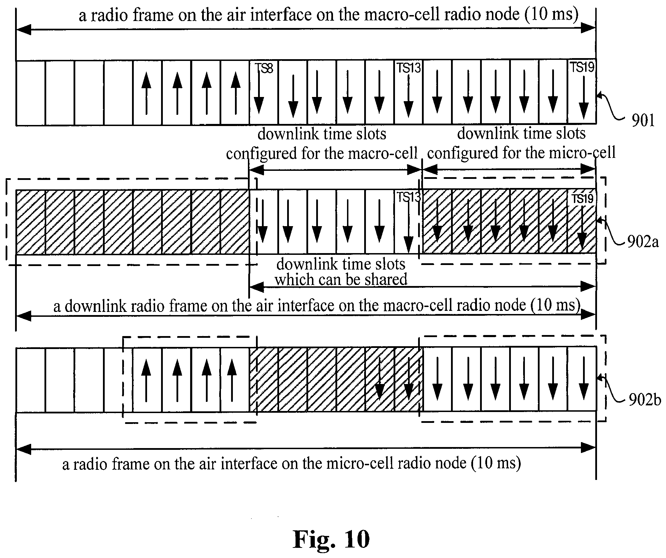

In the present embodiment, the micro-cell radio access point and the macro-cell radio access point share the third band **203** to implement the dynamic spectrum allocation between the micro-cell radio access point and the macro-cell radio access point, which can be illustrated by Fig. 10.

The time division duplexing radio frame **901** adopted by the macro-cell radio node operating on the second band **202** is a radio frame having the structure that meets the LTD TDD specification; and the radio frame **902a** adopted by the macro-cell radio node operating on the third band **203** is a radio frame having the structure which only has the downlink time slots, and the radio frame **902a** can have the structure of a downlink radio frame of the FDD, and can also have the structure of an LTE TDD radio frame served as the downlink time slots.

The radio frame **902a** adopted by the micro-cell radio access point operating on the second sub-band **203b** is a radio frame having the structure which only has the downlink time slots, and the radio frame **902a** is strictly synchronous with the radio frame **901.** And the downlink time slots configuration in the radio frame structure **902a** is identical to the downlink time slots configuration in the radio frame on the second sub-band 203**b.**

A radio frame **902b** adopted by the micro-cell radio access point operating on the second sub-band **203b** is a radio frame having the structure that meets the LTD TDD specification, and the downlink slots which can be shared by the macro-cell radio access point and the micro-cell radio access point are contained in the radio frame structure. And the downlink time slots which can be shared can be dynamically allocated to the macro-cell radio access point and the micro-cell radio access point according to the downlink traffic of the macro-cell radio access point and the micro-cell radio access point and in accordance with the various proportions. As shown in Fig. 10, the TS8-TS19 in the radio frame are the downlink time slots that can be shared by the macro-cell radio access point and the micro-cell radio access point, in which TS8-TS13 are allocated to the macro-cell radio access point to send the downlink signal and the TS13-TS19 are allocated to the micro-cell radio access point to send the downlink signal. The number of the downlink time slots occupied respectively can be adjusted dynamically according to the change of the situation of the downlink traffic of macro-cell radio access point and the micro-cell radio access point. For example, when the downlink traffic of the macro-cell radio access point is larger, the time slots TS8-TS17 can be allocated to the macro-cell radio access point to send the downlink signal and the time slots TS18-TS19 can be allocated to the micro-cell radio access point to send the downlink signal.

In the embodiments of the present invention, in the TDD system, when the macro-cell radio access point and the micro-cell radio access point share the guard band between the TDD system and the FDD system, the downlink time slots shared by the macro-cell radio access point and the micro-cell are allocated in the same radio frame structure. And the number of the downlink time slots occupied respectively can be adjusted according to the change of the situation of the downlink service of macro-cell radio access point and the micro-cell radio access point. Therefore, it can utilize the spectrum resources more effectively, increase the spectrum utilization rate and improve the network performance.

Preferably, in the embodiment of the present invention, the macro-cell radio access point can send the downlink signal to the user terminal by using the single-carrier or multi-carrier on the guard band. For example, the macro-cell radio access point sends the downlink signal to the user terminal by using a carrier on the second sub-band **203b** or the first sub-band **203a,** or the macro-cell radio access point sends the downlink signal to the user terminal by using a carrier on the first sub-band **203a** and the second sub-band **203b.** The macro-cell radio access point sends the downlink signal to the user terminal by using a carrier on the second sub-band **203b** and the first sub-band **203a** respectively. Similarly, the macro-cell radio access point can also receive the uplink signal sent by the user terminal by way of the single-carrier or multi-carrier. For example, the macro-cell radio access point receives the uplink signal sent by the user terminal using a carrier on the second sub-band **203b** or the first sub-band **203a,** or the macro-cell radio access point receives the uplink signal sent by the user terminal using a carrier on the first sub-band **203a** and the second sub-band **203b.** The macro-cell radio access point receives the uplink signal sent by the user terminal using a carrier on the second sub-band **203b** and the first sub-band **203a** respectively.

By using the technical solution of the present invention, for one aspect, the uplink and downlink asymmetric spectrum aggregation are introduced into the guard band between the TDD system and the FDD system and the TDD system's band in the TDD system, thereby improving the flexibility for utilizing the guard band between the TDD system and the FDD system in the TDD system. For another aspect, for the micro-cell radio access point, by introducing the uplink and downlink asymmetric spectrum aggregation on the guard band between the TDD system and the FDD system, bidirectional communication of the micro-cell radio access point on the guard band have been implemented and the mutual interference existing in the receiving and sending the signal between the TDD user terminal carrying out bidirectional communication on the guard band and the FDD terminal on the adjacent bands has been suppressed. For yet another aspect, the flexibility and the effectiveness using the guard band is improved by the flexible configuration of the micro-cell radio access point and the macro-cell radio access point (the macro-cell radio access point is an access point in the TDD system) in the use of the spectrum.

Obviously, various alterations and changes to the present invention are apparent to those skilled in the art without leaving the scope of the present invention. As such, if these alterations and changes to the present invention belong within the scope of claims of the present invention and the equivalent technology, the present invention is also intended to comprise these alterations and changes.

## Claims

1. A method for carrier aggregation, being applied for a time division duplexing, TDD, system or a collaborative system composed of a TDD system and a frequency division duplexing, FDD, system, and comprising:
in a first time interval, sending, by a radio access point, a downlink signal to a user terminal by using a first guard band (203) between the TDD system and the FDD system and a bidirectional communication band (202) of the TDD system,
or/and,
in a second time interval, receiving, by the radio access point, an uplink signal sent by the user terminal using a second guard band (205) between the TDD system and the FDD system and the bidirectional communication band (202);
wherein the first guard band (203) is located between a downlink band (201) of the FDD system and the bidirectional communication band (202); and the second guard band (205) is located between a uplink band (204) of the FDD system and the bidirectional communication band (202);
wherein the radio access point is a micro-cell radio access point; the first guard band (203) comprises a first sub-band (203a) used for one-way communication and a second sub-band (203b) used for bidirectional communication; and the step of sending, by the radio access point, the downlink signal to the user terminal comprises: using, by the radio access point, the first sub-band (203a) or/and the second sub-band (203b) of the first guard band (203), and the bidirectional communication band (202) to send the downlink signal to the user terminal;
wherein the radio access point is a micro-cell radio access point; the second guard band (205) comprises a third sub-band (205a) used for one-way communication and a fourth sub-band (205b) used for bidirectional communication; and the step of receiving, by the radio access point, the uplink signal sent by the user terminal comprises: receiving, by the radio access point, the uplink signal which is sent by the user terminal to the micro-cell radio access point using the third sub-band (205a) or/and the fourth sub-band (205b) of the second guard band (205) and the bidirectional communication band (202).

2. The method according to Claim 1, **characterized in that** a first isolation band is further retained at the side adjacent to the downlink band (201) of the FDD system on the first guard band (203); and
a second isolation band is further retained at the side adjacent to the uplink band (204) of the FDD system on the second guard band (205).

3. The method according to Claim 1, **characterized by**, after the radio access point sends the downlink signal to the user terminal, further comprising:
in the second time interval, receiving, by the radio access point, a second uplink signal sent by the user terminal using the second sub-band (203b) of the first guard band (203) or/and the bidirectional communication band (202).

4. The method according to Claim 1 or 3, **characterized in that** the second sub-band (203b) is located between the first sub-band (203a) and the bidirectional communication band (202).

5. The method according to Claim 1, **characterized by**, before the radio access point receives the uplink signal sent by the user terminal, further comprising:
in the first time interval, sending, by the radio access point, a second downlink signal to the user terminal using the fourth sub-band (205b) of the second guard band (205) or/and the bidirectional communication band (202).

6. The method according to Claim 1 or 5, **characterized in that** the fourth sub-band (205b) is located between the third sub-band (205a) and the bidirectional communication band (202).

7. The method according to Claim 1, **characterized in that** the first guard band (203) and the second guard band (205) are guard bands between a TDD macro-cell and a FDD macro-cell deployed with co-site or co-antenna.

8. The method according to Claim 1, **characterized by** being applied for the dynamic spectrum allocation of sharing a guard band between the micro-cell radio access point and a macro-cell radio access point in the time division duplexing (TDD) system, and comprising:
in the first time interval, sending, by the macro-cell access point, a first downlink signal to a user terminal by using the first guard band (203) between the TDD system and the frequency division duplexing (FDD) system and the bidirectional communication band (202) of the TDD system;
in the second time interval, sending, by the micro-cell access point, a second downlink signal to the user terminal by using the first guard band (203) between the TDD system and the FDD system and the bidirectional communication band (202) of the TDD system;
or,
in a third time interval, receiving, by the macro-cell radio access point, a first uplink signal sent by the user terminal using the second guard band (205) between the TDD system and the FDD system and the bidirectional communication band (202);
in a fourth time interval, receiving, by the micro-cell radio access point, a second uplink signal sent by the user terminal using the second guard band (205) between the TDD system and the FDD system and the bidirectional communication band (202);
the first time interval and the second time interval being respectively a time interval composed of different downlink time slots in the same radio frame;
the third time interval and the fourth time interval being respectively a time interval composed of different uplink time slots in the radio frame; and
adjusting the number of downlink time slots composing the respective time interval and adjusting the number of uplink time slots composing the respective time interval according to the downlink traffic of the macro-cell access point and the micro-cell access point.

9. The method according to Claim 8, **characterized in that**
in the first time interval, sending, by the macro-cell access point, the first downlink signal to the user equipment by using the first guard band (203) comprises the steps of:
sending, by the macro-cell radio access point, the first downlink signal to the user equipment on the second sub-band (203b) or/and the first sub-band (203a) by using a downlink carrier;
or, sending, by the macro-cell radio access point, the first downlink signal to the user equipment by using two downlink carriers, wherein one downlink carrier of the two downlink carriers is sent through the second sub-band (203b), and the other downlink carrier is sent through the first sub-band (203a).

10. The method according to Claim 8 or 9, **characterized in that** the first downlink signal is one or more of the following signals: a multimedia broadcast signal, a cell synchronization signal, service data, and a cell information broadcast signal of the macro-cell radio access point.

## Patentansprüche

1. Ein Verfahren zur Trägeraufnahme, angewandt an ein Time Division Duplexing- (TDD-)System oder ein zusammengesetztes System, das aus einem TDD-System und einem Frequency Division Duplexing- (FDD-)System besteht und Folgendes umfasst:
in einem ersten Zeitintervall, Senden, über einen Funkzugangspunkt, eines Abwärtsstrecken-Signals an ein Teilnehmergerät unter Verwendung eines ersten Schutzbandes (203) zwischen dem TDD-System und dem FDD-System und eines bidirektionalen Kommunikationsbandes (202) des TDD-Systems,
und/oder
in einem zweiten Zeitintervall, Empfangen, über den Funkzugangspunkt, eines Aufwärtsstrecken-Signals, das vom Teilnehmergerät gesendet wird unter Verwendung eines zweiten Schutzbandes (205) zwischen dem TDD-System und dem FDD-System und des bidirektionalen Kommunikationsbandes (202);
wobei das erste Schutzband (203) sich zwischen einem Abwärtsstrecken-Band (201) des FDD-Systems und dem bidirektionalen Kommunikationsband (202) befindet; und das zweite Schutzband (205) sich zwischen einem Aufwärtsstrecken-Band (204) des FDD-Systems und dem bidirektionalen Kommunikationsband (202) befindet;
wobei der Funkzugangspunkt ein Mikrozellen-Funkzugangspunkt ist; das erste Schutzband (203) umfasst ein erstes Teilband (203a), das für einseitige Datenübermittlung verwendet wird, und ein zweites Teilband (203b), das für bidirektionale Kommunikation verwendet wird; und der Schritt des Sendens des Abwärtsstrecken-Signals an das Teilnehmergerät über den Funkzugangspunkt umfasst Folgendes: Nutzung, durch den Funkzugangspunkt, des ersten Teilbandes (203a) und/oder des zweiten Teilbandes (203b) des ersten Schutzbandes (203) und des bidirektionalen Kommunikationsbandes (202), um das Abwärtsstrecken-Signal an das Teilnehmergerät zu senden;
wobei der Funkzugangspunkt ein Mikrozellen-Funkzugangspunkt ist; das zweite Schutzband (205) umfasst ein drittes Teilband (205a), das für einseitige Datenübermittlung verwendet wird, und ein viertes Teilband (205b), das für bidirektionale Kommunikation verwendet wird; und der Schritt des Empfangens des Aufwärtsstrecken-Signals, das vom Teilnehmergerät gesendet wird, durch den Funkzugangspunkt umfasst Folgendes: Empfangen, durch den Funkzugangspunkt, des Aufwärtsstrecken-Signals, das vom Teilnehmergerät an den Mikrozellen-Funkzugangspunkt gesendet wird, unter Verwendung des dritten Teilbandes (205a) und/oder des vierten Teilbandes (205b) des zweiten Schutzbandes (205) und des bidirektionalen Kommunikationsbandes (202).

2. Das Verfahren gemäß Anspruch 1, **dadurch gekennzeichnet, dass** weiter ein erstes Entkopplungsband an der Seite gehalten wird, die an das Abwärtsstrecken-Band (201) des FDD-Systems am ersten Schutzband (203) angrenzt; und
weiter ein zweites Entkopplungsband an der Seite gehalten wird, die an das Aufwärtsstrecken-Band (204) des FDD-Systems am zweiten Schutzband (205) angrenzt.

3. Das Verfahren gemäß Anspruch 1, **dadurch gekennzeichnet, dass** es, nach dem Senden des Abwärtsstrecken-Signals an das Teilnehmergerät durch den Funkzugangspunkt, weiter Folgendes umfasst:
im zweiten Zeitintervall, Empfangen, durch den Funkzugangspunkt, eines zweiten Aufwärtsstrecken-Signals, das vom Teilnehmergerät gesendet wird, unter Verwendung des zweiten Teilbandes (203b) des ersten Schutzbandes (203) und/oder des bidirektionalen Kommunikationsbandes (202).

4. Das Verfahren gemäß Anspruch 1 oder 3, **dadurch gekennzeichnet, dass** das zweite Teilband (203b) sich zwischen dem ersten Teilband (203a) und dem bidirektionalen Kommunikationsband (202) befindet.

5. Das Verfahren gemäß Anspruch 1, **dadurch gekennzeichnet, dass** es, vor dem Empfangen des vom Teilnehmergerät gesendeten Aufwärtsstrecken-Signals durch den Funkzugangspunkt, weiter Folgendes umfasst:
im ersten Zeitintervall, Senden, durch den Funkzugangspunkt, eines zweiten Abwärtsstrecken-Signals an das Teilnehmergerät unter Verwendung des vierten Teilbandes (205b) des zweiten Schutzbandes (205) und/oder des bidirektionalen Kommunikationsbandes (202).

6. Das Verfahren gemäß Anspruch 1 oder 5, **dadurch gekennzeichnet, dass** das vierte Teilband (205b) sich zwischen dem dritten Teilband (205a) und dem bidirektionalen Kommunikationsband (202) befindet.

7. Das Verfahren gemäß Anspruch 1, **dadurch gekennzeichnet, dass** das erste Schutzband (203) und das zweite Schutzband (205) Schutzbänder zwischen einer TDD-Makrozelle und einer FDD-Makrozelle, ausgestattet mit Co-Stelle oder Co-Antenn, sind.

8. Das Verfahren gemäß Anspruch 1, **dadurch gekennzeichnet, dass** es auf die dynamische Spektrumszuteilung des Teilens eines Schutzbandes zwischen dem Mikrozellen-Funkzugangspunkt und einem Makrozellen-Funkzugangspunkt im Time Division Duplexing-(TDD-)System angewandt wird und Folgendes umfassend:
im ersten Zeitintervall, Senden, durch den Makrozellen-Zugangspunkt, eines ersten Abwärtsstrecken-Signals an ein Teilnehmergerät unter Verwendung des ersten Schutzbandes (203) zwischen dem TDD-System und dem Frequency Division Duplexing-(FDD-) System und des bidirektionalen Kommunikationsbandes (202) des TDD-Systems;
im zweiten Zeitintervall, Senden, durch den Mikrozellen-Zugangspunkt, eines zweiten Abwärtsstrecken-Signals an das Teilnehmergerät unter Verwendung des ersten Schutzbandes (203) zwischen dem TDD-System und dem FDD-System und des bidirektionalen Kommunikationsbandes (202) des TDD-Systems;
oder
in einem dritten Zeitintervall, Empfangen, durch den Makrozellen-Funkzugangspunkt, eines ersten Aufwärtsstrecken-Signals, das vom Teilnehmergerät gesendet wird unter Verwendung des zweiten Schutzbandes (205) zwischen dem TDD-System und dem FDD-System und des bidirektionalen Kommunikationsbandes (202);
in einem vierten Zeitintervall, Empfangen, durch den Mikrozellen-Funkzugangspunkt, eines zweiten Aufwärtsstrecken-Signals, das vom Teilnehmergerät gesendet wird unter Verwendung des zweiten Schutzbandes (205) zwischen dem TDD-System und dem FDD-System und des bidirektionalen Kommunikationsbandes (202);
wobei das erste Zeitintervall und das zweite Zeitintervall jeweils ein Zeitintervall sind, das aus verschiedenen Abwärtsstrecken-Zeitfenstern in demselben Funkrahmen besteht;
wobei das dritte Zeitintervall und das vierte Zeitintervall jeweils ein Zeitintervall sind, das aus verschiedenen Aufwärtsstrecken-Zeitfenstern im Funkrahmen besteht; und
Anpassen der Anzahl an Abwärtsstrecken-Zeitfenstern, die das entsprechende Zeitintervall bilden, und Anpassen der Anzahl an Aufwärtsstrecken-Zeitfenstern, die das entsprechende Zeitintervall bilden, entsprechend dem Abwärtsstrecken-Verkehr des Makrozellen-Zugangspunkts und des Mikrozellen-Zugangspunkts.

9. Das Verfahren gemäß Anspruch 8, **dadurch gekennzeichnet, dass**
im ersten Zeitintervall das Senden, durch den Makrozellen-Zugangspunkt, des ersten Abwärtsstrecken-Signals an das Teilnehmergerät unter Verwendung des ersten Schutzbandes (203) folgende Schritte umfasst:
Senden, durch den Makrozellen-Funkzugangspunkt, des ersten Abwärtsstrecken-Signals an das Teilnehmergerät auf dem zweiten Teilband (203b) und/oder dem ersten Teilband (203a) durch Verwendung eines Abwärtsstrecken-Trägers;
oder das Senden, durch den Makrozellen-Funkzugangspunkt, des ersten Abwärtsstrecken-Signals an das Teilnehmergerät durch Verwendung zweier Abwärtsstrecken-Träger, wobei ein Abwärtsstrecken-Träger der zwei Abwärtsstrecken-Träger über das zweite Teilband (203b) gesendet wird und der andere Abwärtsstrecken-Träger über das erste Teilband (203a) gesendet wird.

10. Das Verfahren gemäß Anspruch 8 oder 9, **dadurch gekennzeichnet, dass** das erste Abwärtsstrecken-Signal eines oder mehrere der folgenden Signale ist: ein Multimedia-Rundfunksignal, ein Zell-Synchronisationssignal, Dienstdaten und ein Zellinformations-Rundfunksignal des Makrozellen-Funkzugangspunkts.

## Revendications

1. Procédé d'agrégation de porteuses, étant appliqué pour un système de duplex par séparation temporelle, TDD, ou un système collaboratif composé d'un système de TDD et d'un système de duplex par répartition en fréquence, FDD, et comprenant :
dans un premier intervalle de temps, d'envoyer, par un point d'accès radio, un signal sur liaison descendante à un terminal utilisateur en utilisant une première bande de garde (203) entre le système de TDD et le système de FDD et une bande de communication bidirectionnelle (202) du système de TDD,
ou/et,
dans un second intervalle de temps, de recevoir, par le point d'accès radio, un signal sur liaison montante envoyé par le terminal utilisateur en utilisant une seconde bande de garde (205) entre le système de TDD et le système de FDD et la bande de communication bidirectionnelle (202) ;
dans lequel la première bande de garde (203) est située entre une bande de liaison descendante (201) du système de FDD et la bande de communication bidirectionnelle (202) ; et la seconde bande de garde (205) est située entre une bande de liaison montante (204) du système de FDD et la bande de communication bidirectionnelle (202) ;
dans lequel le point d'accès radio est un point d'accès radio de microcellule ; la première bande de garde (203) comprend une première sous-bande (203a) utilisée pour une communication unidirectionnelle et une seconde sous-bande (203b) utilisée pour une communication bidirectionnelle ; et l'étape consistant à envoyer, par le point d'accès radio, le signal sur liaison descendante vers le terminal utilisateur comprend : d'utiliser, par le point d'accès radio, la première sous-bande (203a) ou/et la seconde sous-bande (203b) de la première bande de garde (203), et la bande de communication bidirectionnelle (202) pour envoyer le signal sur liaison descendante au terminal utilisateur ;
dans lequel le point d'accès radio est un point d'accès radio de microcellule ; la seconde bande de garde (205) comprend une troisième sous-bande (205a) utilisée pour une communication unidirectionnelle et une quatrième sous-bande (205b) utilisée pour une communication bidirectionnelle ; et l'étape consistant à recevoir, par le point d'accès radio, le signal sur liaison montante envoyé par le terminal utilisateur comprend : de recevoir, par le point d'accès radio, le signal sur liaison montante qui est envoyé par le terminal utilisateur au point d'accès radio de microcellule en utilisant la troisième sous-bande (205a) ou/et la quatrième sous-bande (205b) de la seconde bande de garde (205) et la bande de communication bidirectionnelle (202).

2. Procédé selon la revendication 1, **caractérisé en ce qu'**une première bande d'isolation est en outre retenue au niveau du côté adjacent à la bande de liaison descendante (201) du système de FDD sur la première bande de garde (203) ; et
une seconde bande d'isolation est en outre retenue au niveau du côté adjacent la bande de liaison montante (204) du système de FDD sur la seconde bande de garde (205).

3. Procédé selon la revendication 1, **caractérisé par**, après que le point d'accès radio envoie le signal sur liaison descendante au terminal utilisateur, le fait qu'il comprend en outre :
dans le second intervalle de temps, de recevoir, par le point d'accès radio, un second signal sur liaison montante envoyé par le terminal utilisateur en utilisant la seconde sous-bande (203b) de la première bande de garde (203) ou/et la bande de communication bidirectionnelle (202).

4. Procédé selon la revendication 1 ou 3, **caractérisé en ce que** la seconde sous-bande (203b) est située entre la première sous-bande (203a) et la bande de communication bidirectionnelle (202).

5. Procédé selon la revendication 1, **caractérisé par**, avant que le point d'accès radio reçoive le signal sur liaison montante envoyé par le terminal utilisateur, le fait qu'il comprend en outre :
dans le premier intervalle de temps, d'envoyer, par le point d'accès radio, un second signal sur liaison descendante au terminal utilisateur en utilisant la quatrième sous-bande (205b) de la seconde bande de garde (205) ou/et la bande de communication bidirectionnelle (202).

6. Procédé selon la revendication 1 ou 5, **caractérisé en ce que** la quatrième sous-bande (205b) est située entre la troisième sous-bande (205a) et la bande de communication bidirectionnelle (202).

7. Procédé selon la revendication 1, **caractérisé en ce que** la première bande de garde (203) et la seconde bande de garde (205) sont des bandes de garde entre une macro-cellule de TDD et une macro-cellule de FDD déployées avec co-site ou co-antenne.

8. Procédé selon la revendication 1, **caractérisé en ce qu'**il est appliqué pour l'allocation de spectre dynamique de partage d'une bande de garde entre le point d'accès radio de microcellule et un point d'accès radio de macro-cellule dans le système de duplex par séparation temporelle (TDD), et comprenant :
dans le premier intervalle de temps, d'envoyer, par le point d'accès radio de macro-cellule, un premier signal sur liaison descendante à un terminal utilisateur en utilisant la première bande de garde (203) entre le système de TDD et le système de duplex par répartition en fréquence (FDD) et la bande de communication bidirectionnelle (202) du système de TDD ;
dans le second intervalle de temps, d'envoyer, par le point d'accès radio de microcellule, un second signal sur liaison descendante au terminal utilisateur en utilisant la première bande de garde (203) entre le système de TDD et le système de FDD et la bande de communication bidirectionnelle (202) du système de TDD ;
ou,
dans un troisième intervalle de temps, de recevoir, par le point d'accès radio de macro-cellule, un premier signal sur liaison montante envoyé par le terminal utilisateur en utilisant la seconde bande de garde (205) entre le système de TDD et le système de FDD et la bande de communication bidirectionnelle (202) ;
dans un quatrième intervalle de temps, de recevoir, par le point d'accès radio de microcellule, un second signal sur liaison montante envoyé par le terminal utilisateur en utilisant la seconde bande de garde (205) entre le système de TDD et le système de FDD et la bande de communication bidirectionnelle (202) ;
le premier intervalle de temps et le second intervalle de temps étant respectivement un intervalle de temps composé de différents créneaux de temps de liaison descendante dans la même trame radio ;
le troisième intervalle de temps et le quatrième intervalle de temps étant respectivement un intervalle de temps composé de différents créneaux de temps de liaison montante dans la trame radio ;
d'ajuster le nombre de créneaux de temps de liaison descendante composant l'intervalle de temps respectif et d'ajuster le nombre de créneaux de temps de liaison montante composant l'intervalle de temps respectif selon le trafic de liaison descendante du point d'accès radio de macro-cellule et du point d'accès radio de microcellule.

9. Procédé selon la revendication 8, **caractérisé en ce que**
dans le premier intervalle de temps, envoyer, par le point d'accès radio de microcellule, le premier signal sur liaison descendante à l'équipement utilisateur en utilisant la première bande de garde (203) comprend les étapes consistant à :
envoyer, par le point d'accès radio de macro-cellule, le premier signal sur liaison descendante à l'équipement utilisateur sur la seconde sous-bande (203b) ou/et la première sous-bande (203a) en utilisant une porteuse de liaison descendante ;
ou, envoyer, par le point d'accès radio de macro-cellule, le premier signal sur liaison descendante à l'équipement utilisateur en utilisant deux porteuses de liaison descendante, dans lequel une porteuse de liaison descendante des deux porteuses de liaison descendante est envoyée par l'intermédiaire de la seconde sous-bande (203b), et l'autre porteuse aval est envoyée par l'intermédiaire de la première sous-bande (203a).

10. Procédé selon la revendication 8 ou 9, **caractérisé en ce que** le premier signal sur liaison descendante est un ou plus des signaux suivants : un signal de diffusion multimédia, un signal de synchronisation de cellules, des données de service, et un signal de diffusion d'information de cellule du point d'accès radio de macro-cellule.
